# EUROPÄISCHE PATENTSCHRIFT

(11) **EP 2 778 190 B1**
(45) Veröffentlichungstag und Bekanntmachung des Hinweises auf die Patenterteilung: **15.07.2015**
(21) Anmeldenummer: 13159541.5
(22) Anmeldetag: 15.03.2013
(51) Int. Cl.: C08G 69/26, C08L 77/06

(54) **Polyamidformmasse sowie hieraus hergestellter Formkörper**
Polyamide moulding material and moulded body produced from the same
Masse de formage polyamide et corps de formage fabriqué à partir de celle-ci

(43) Veröffentlichungstag der Anmeldung: 17.09.2014
(73) Patentinhaber: EMS-PATENT AG, 7013 Domat / Ems (CH)
(72) Erfinder: Bühler, Friedrich Severin Dr., "verstorben" (CH)
(74) Vertreter: Pfenning, Meinig & Partner GbR

(56) Entgegenhaltungen:
- EP-A1- 2 412 757
- WO-A2-2009/156323

## Beschreibung

Die Erfindung betrifft eine Polyamidformmasse aus einem Polyamid (PA MACM12) aus Bis(3-methyl-4-aminocyclohexyl)methan (MACM) und Dodecandisäure, einem Polyamid (PA PACM12) aus Bis(4-aminocyclohexyl)methan (PACM) und Dodecandisäure, einem Polyamid (PA MACM10) aus Bis(3-methyl-4-aminocyclohexyl)methan und Decandisäure, einem Polyamid (PA PACM10) aus Bis(4-aminocyclohexyl)methan (PACM) und Decandisäure, einem Polyamid (PA MACM14) aus Bis(3-methyl-4-aminocyclohexyl)methan (MACM) und Tetradecandisäure, einem Polyamid (PA PACM14) aus Bis(4-aminocyclohexyl)methan (PACM) und Tetradecandisäure sowie deren Mischungen und Copolyamiden. Weiterhin enthält die Formmasse als Schlagzähmodifikator ein funktionalisiertes Styrol-Ethylen/Butylen-Styrol-Blockcopolymer sowie ggf. weitere Zusatzstoffe. Ebenso betrifft die Erfindung aus dieser Polyamidformmasse hergestellte Formkörper.

Im Bereich der transparenten Polyamide mit hoher Lichtdurchlässigkeit sind zwei Polymertypen bekannt, amorphe, die nur eine Glasübergangstemperatur aufweisen und mikrokristalline, die eine Glasübergangstemperatur und einen Schmelzpunkt besitzen. Als amorph werden Polyamide bezeichnet, welche in der dynamischen Differenz-Kalorimetrie (engl. Differential Scanning Calorimetry, DSC) nach ISO 11357 bei einer Aufheizrate von 20 K/min eine Schmelzwärme von maximal 3 J/g, bevorzugt maximal 1 J/g zeigen.

Aus der EP-A-O 725 101 sind amorphe, transparente Polyamidformmassen mit hoher chemischer und thermischer Beständigkeit und ausgezeichneter dynamischer Belastbarkeit gegenüber Dauerschwingbelastung bekannt, die aus MACM (Bis-(4-amino-3-methyl-cyclohexyl)-methan) und Dodecandisäure aufgebaut werden. Schlagzähmodifikatoren als mögliche Additive werden in der EP-A-O 725 101 nur allgemein erwähnt.

Aus der EP 1 369 447 A1 sind transparente Polyamidformmassen bekannt, die auf Mischungen von PACM und MACM basieren und eine verbesserte Transparenz aufweisen. Als mögliche Additive sind u.a. Schlagzähmodifikatoren genannt, wobei Ethylen-Glycidyl-Methacrylat oder mit Maleinsäureanhydrid gepfropftes Polyethylen oder Polypropylen bevorzugt sind.

Ausgehend hiervon war es Aufgabe der vorliegenden Erfindung schlagzähmodifizierte Polyamidformmassen bereit zu stellen, die sowohl im Hinblick auf die mechanischen als auch auf die optischen Eigenschaften gegenüber dem Stand der Technik verbessert sind. Hinsichtlich der optischen Eigenschaften betrifft dies insbesondere die Minimierung der Opazität (Haze) und Maximierung der Transmission der aus der erfindungsgemäßen schlagzähmodifizierten Polyamidformmasse hergestellten Formkörper.

Diese Aufgabe wird durch die Polyamidformmasse mit den Merkmalen des Anspruchs 1 sowie die Formkörper mit den Merkmalen des Anspruchs 13 gelöst. In Anspruch 15 werden erfindungsgemäß Verwendungen angegeben, die weiteren abhängigen Ansprüche zeigen vorteilhafte Weiterbildungen auf.

Gemäß der vorliegenden Erfindung wird eine Polyamidformmasse bereitgestellt, die folgende Komponenten enthält:
a) 82 bis 96 Gew.-%, bezogen auf die Summe der Komponenten a) bis c), mindestens eines Polyamids ausgewählt aus der Gruppe bestehend aus
   - Polyamid (PA MACM12) aus Bis(3-methyl-4-aminocyclohexyl)methan und Dodecandisäure,
   - Polyamid (PA PACM12) aus Bis(4-amino-cyclohexyl)methan und Dodecandisäure,
   - Polyamid (PA MACM10) aus Bis(3-methyl-4-aminocyclohexyl)methan (MACM) und Decandisäure,
   - Polyamid (PA PACM10) aus Bis(4-aminocyclohexyl)methan (PACM) und Decandisäure,
   - Polyamid (PA MACM14) aus Bis(3-methyl-4-aminocyclohexyl)methan (MACM) und Tetradecandisäure,
   - Polyamid (PA PACM14) aus Bis(4-aminocyclohexyl)methan (PACM) und Tetradecandisäure sowie
   - deren Mischungen und Copolyamiden,
b) 4 bis 18 Gew.-%, bezogen auf die Summe der Komponenten a) bis c), eines funktionalisierten Styrol-Ethylen/Butylen-Styrol-Blockcopolymers als Schlagzähmodifikator sowie
c) 0 bis 8 Gew.-%, bezogen auf die Summe der Komponenten a) bis c), weiterer Zusatzstoffe,
wobei sich die Komponente a) bis c) zu 100 Gew.-% ergänzen.

Die Polyamidformmasse kann grundsätzlich weitere Komponenten enthalten, besteht aber vorzugsweise aus den Komponenten a) bis c).

Die Kombination der genannten Polyamide mit dem erfindungsgemäßen Schlagzähmodifikator führte zu Formkörpern mit verbesserten mechanischen Eigenschaften, wobei überraschenderweise gleichzeitig auch die optischen Eigenschaften nahezu unbeeinträchtigt sind. Insbesondere konnte durch die erfindungsgemäße Zusammensetzung der Polyamidformmasse ein starker Anstieg des Streuverhaltens (Haze) der hieraus hergestellten Formkörper verhindert werden.

Die erfindungsgemäßen Polyamidformmassen führen zu Formkörpern mit sehr guten mechanischen Eigenschaften.

So besitzen die aus den erfindungsgemäßen Polyamidformmassen hergestellten Prüfkörper, vorzugweise eine Kerbschlagzähigkeit nach Charpy von mindestens 40 kJ/m², bevorzugt von mindestens 50 kJ/m² und besonders bevorzugt von mindestens 60 kJ/m² auf. Die Bestimmung der Kerbschlagzähigkeit erfolgt nach ISO 179.

Weiterhin weisen die aus der Polyamidformmasse hergestellten Prüfkörper bevorzugt eine Reißfestigkeit von mindestens 30 MPa, besonders bevorzugt 40 MPa und/oder eine Reißdehnung von vorzugsweise mindestens 80 %, bevorzugt mindestens 100% und besonders bevorzugt 115 %. Diese mechanischen Eigenschaften sind jeweils gemäß ISO 527 bestimmt.

Besonders überraschend war es, dass aus der erfindungsgemäßen Polyamidformmasse hergestellte Prüfkörper einen Haze, gemessen an 2 mm dicken Rundplatten nach ASTM D 1003 von bevorzugt maximal 30 % und besonders bevorzugt maximal 20 % aufweisen.

Die aus der Polyamidformmasse hergestellten Prüfkörper weisen vorzugweise eine Lichttransmission von mindestens 75 %, bevorzugt von mindestens 85 % und besonders bevorzugt von mindestens 90 % auf. Auch hier erfolgte die Messung an 2 mm dicken Rundplatten nach ASTM D 1003.

In einer bevorzugten Ausführungsform weist die erfindungsgemäße Polyamidformmasse einen Anteil von 84 bis 96 Gew.-%, besonders bevorzugt von 85 bis 95 Gew.-% an Polyamid, jeweils bezogen auf die Summe der Komponenten a) bis c) auf.

Es ist weiter bevorzugt, dass die Polyamidformmasse von 4 bis 16 Gew.-%, besonders bevorzugt von 5 bis 15 Gew.-%, jeweils bezogen auf die Summe der Komponenten a) bis c) des funktionalisierten Styrol-Ethylen/Butylen-Styrol-Blockcopolymers aufweist.

Bei dem Styrol-Ethylen/Butylen-Styrol-Blockcopolymer handelt es sich um ein lineares Triblockcopolymer (SEBS), aus einem Ethylen/Butylen-Block und zwei Styrolblöcken.

Eine bevorzugte Ausführungsform sieht vor, dass der Styrolanteil im funktionalisierten Styrol-Ethylen/Butylen-Styrol-Blockcopolymer bevorzugt 20 bis 45 Gew.-%, besonders bevorzugt 25 bis 40 Gew.-% und ganz besonders bevorzugt 25 bis 35 Gew.-% beträgt.

Das funktionalisierte Styrol-Ethylen/Butylen-Styrol-Blockcopolymer weist bevorzugt eine Schmelze-Volumenfließrate von 90 bis 160 ccm/10min, besonders bevorzugt von 100 bis 150 cmm/10min und ganz besonders bevorzugt von 110 bis 140 cmm/10min auf. Die Schmelz-Volumenfließrate wurde bei 275°C und 5 kg nach ISO 1133 gemessen.

Unter funktionalisiertem Styrol-Ethylen/Butylen-Styrol-Blockcopolymer ist ein durch Säuremodifikation funktionalisiertes Styrol-Ethylen/Butylen-Styrol-Blockcopolymer zu verstehen. Diese Säuremodifikation erfolgt durch Pfropfen mit ungesättigten Carbonsäuren und/oder ungesättigten Carbonsäurederivaten, bevorzugt einem Carbonsäurederivat ausgewählt aus der Gruppe bestehend aus ungesättigten Carbonsäureestern und ungesättigten Carbonsäureanhydriden, insbesondere mit einer ungesättigten Carbonsäure und/oder deren Anhydrid ausgewählt aus der Gruppe bestehend aus Acrylsäure, Methacrylsäure, alpha-Ethylacrylsäure, Maleinsäure, Fumarsäure, Itaconsäure, Citraconsäure, Aconitsäure, Tetrahydrophthalsäure und/oder Butenylsuccinsäure, d.h. dass das Styrol-Ethylen-Butylen/Styrol-Blockcopolymer aufgepfropfte ungesättigte Carbonsäuren und/oder ungesättigte Carbonsäurederivate im Molekül enthält. Die Bedingungen, unter denen die Pfropfung des Styrol-Ethylen/Butylen-Styrol-Blockcopolymeren abläuft, sind dem Fachmann hinlänglich bekannt.

Der Anteil an ungesättigten Carbonsäuren und/oder ungesättigten Carbonsäurederivaten im funktionalisierten Styrol-Ethylen/Butylen-Styrol-Blockcopolymer beträgt bevorzugt 1,0 bis 2,3 Gew.-%, besonders bevorzugt 1,1 bis 2,0 Gew.-%, ganz besonders bevorzugt 1,4 bis 1,9 Gew.-%.

In einer weiteren Ausführungsform setzt sich der Schlagzähmodifikator aus einem funktionalisierten Styrol-Ethylen-Butylen/Styrol-Blockcopolymeranteil und einem nicht funktionalisierten Styrol-Ethylen/Butylen-Styrol-Blockcopolymeranteil zusammen. Der Funktionalisierungsanteil des funktionalisierten Blockcopolymeren und die jeweiligen Anteile des funktionalisierten und des nicht funktionalisierten Blockcopolymeren werden dann so gewählt, dass sich für den Schlagzähmodifikator insgesamt ein Funktionalisierungsanteil von bevorzugt 1,0 bis 2,3 Gew.-%, besonders bevorzugt 1,1 bis 2,0 Gew.-%, ganz besonders bevorzugt 1,4 bis 1,9 Gew.-% ergibt.

Besonders bevorzugt erfolgt die Säuremodifikation des Styrol-Ethylen/Butylen-Styrol-Blockcopolymeren mit Maleinsäureanhydrid, wobei der Maleinsäureanhydridanteil am funktionalisierten Styrol-Ethylen/Butylen-Styrol-Blockcopolymeren bevorzugt 1,0 bis 2,3 Gew.-%, besonders bevorzugt 1,1 bis 2,0 Gew.-%, ganz besonders bevorzugt 1,4 bis 1,9 Gew.-% beträgt.

Bei den in den Polyamiden verwendeten Monomeren handelt es sich um Bis(3-methyl-4-aminocyclohexyl)methan (abgekürzt MACM) mit einem Erstarrungspunkt von -7 bis -1°C (CAS-Nr. 6864-37-5, Handelsname, z.B. Laromin C260, Hersteller, z.B. BASF), Bis(4-aminocyclohexyl)methan (abgekürzt PACM) mit einem Schmelzpunkt von 33,5 bis 44 °C (CAS-Nr. 1761-71-3, Handelsname, z.B. Dicykan, Hersteller, z.B. BASF), 1,12-Dodecandisäure mit einem Schmelzpunkt von 130 °C (CAS-Nr. 693-23-2, Hersteller, z.B. INVISTA Nederland B.V.), 1,10-Decandisäure mit einem Schmelzpunkt von 134 - 135 °C (CAS-Nr. 111-20-6, Bezugsquelle, z.B. Helm AG, Deutschland) und 1,14-Tetradecandisäure mit einem Schmelzpunkt von 126 - 127 °C (CAS-Nr. 821-38-5, Hersteller, z.B. Cathay Industrial Biotech Ltd., China).

Die relative Viskosität der Polyamide gemessen nach ISO 307 in m-Kresol beträgt 1,50 bis 2,2, bevorzugt 1,55 bis 1,95, besonders bevorzugt 1,60 bis 1,90, ganz besonders bevorzugt 1,65 bis 1,80.

Zur Einstellung der gewünschten relativen Viskosität können auch Polyamide verschiedener relativer Viskosität gemischt werden.

Die Glasübergangstemperatur der Polyamide gemessen nach 11357 beträgt 132 bis 165 °C, bevorzugt 137 bis 158 °C

Unter den erfindungsgemäßen Copolyamiden sind PA MACM12/PACM12, PA MACM10/PACM10 und PA MACM14/PACM14 bevorzugt.

Bevorzugt wird der Anteil von PACM zu MACM in den Copolyamiden so eingestellt, dass sie amorph sind.

Im besonders bevorzugten erfindungsgemäßen (Co)Polyamid PA MACM12/PACM12 beträgt der PACM-Anteil des Diamins 0 bis 100 Mol%, bevorzugt 0 bis 85 Mol-%, besonders bevorzugt 0 bis 55 Mol-%, ganz besonders bevorzugt 0,1 bis 50 Mol-%, wobei die Summe der Anteile der beiden Diaminkomponenten MACM und PACM 100 Mol-% ergibt. Als Disäure wird im PA MACM12/PACM12 immer 100 Mol-% Dodecandisäure verwendet.

Der Anteil von PACM zu MACM wird im Copolyamid MACM12/PACM12 bevorzugt so eingestellt, dass es amorph ist.

Hinsichtlich der möglichen Zusatzstoffe sind die erfindungsgemäßen Polyamidformmassen nicht beschränkt. Vielmehr können hier alle für Polyamidformmassen gängigen Zusatzstoffe enthalten sein. Vorzugweise sind die Zusatzstoffe ausgewählt aus der Gruppe bestehend aus anorganischen und organischen Stabilisatoren, insbesondere Antioxidantien, Antiozonantien, Lichtschutzmittel, UV-Stabilisatoren, UV-Absorber oder UV-Blocker, Gleitmitteln, Farbstoffen, Markierungsmitteln, Pigmenten, Ruß, Graphit, Titandioxid, Zinksulfid, Zinkoxid, Bariumsulfat, photochromen Agenzien, Antistatika, Entformungsmitteln, optischen Aufhellern, halogenhaltigen Flammschutzmitteln, halogenfreien Flammschutzmitteln, natürlichen Schichtsilikaten, synthetischen Schichtsilikaten und deren Mischungen. Die Zusatzstoffe sind bevorzugt in einer Menge von 0,1 bis 6 Gew.-% und besonders bevorzugt von 0,2 bis 4 Gew.-%, bezogen auf die gesamte Polyamidformmasse enthalten. Dabei ist es bevorzugt, dass die Menge jedes einzelnen Zusatzstoffes maximal 3 Gew.-% beträgt.

Erfindungsgemäß werden auch Formkörper bereitgestellt, die aus der zuvor beschriebenen Polyamidformmasse herstellbar sind. Die Formkörper sind dabei vorzugsweise ausgewählt aus der Gruppe bestehend aus Brillenteilen, insbesondere Brillenrahmen oder Brillenbügeln, insbesondere für Sicherheitsbrillen, Sportbrillen oder Skibrillen, Schaugläsern, Durchflussmessern, Berstscheiben, Behältern, Gehäusen oder Gehäuseteilen, insbesondere für Rasierapparate, Epiliergeräte, Messgeräte, Infrarotschlüssel, Mobiltelefone, transportable Abspielgeräte, Personal Digital Assistants (PDA), Smartphones oder Speichermedien (z.B. USB-Sticks).

Verwendung finden die erfindungsgemäßen Formmassen zur Herstellung von Brillenteile, insbesondere Brillenrahmen oder Brillenbügeln, insbesondere für Sicherheitsbrillen, Sportbrillen oder Skibrillen, Schaugläsern, Durchflussmessern, Berstscheiben, Behältern, Gehäusen oder Gehäuseteilen, insbesondere für Rasierapparate, Epiliergeräte, Messgeräte, Infrarotschlüssel, Mobiltelefone, transportable Abspielgeräte, Personal Digital Assistants (PDA), Smartphones oder Speichermedien (z.B. USB-Sticks).

Anhand der nachfolgenden Beispiele soll der erfindungsgemäße Gegenstand im Detail beschrieben werden, ohne diesen auf die hier gezeigten spezifischen Ausführungsformen einschränken zu wollen.

### Herstellung einer erfindungsgemäßen Polyamidformmasse

Die nachfolgende Beschreibung der Herstellung dient zur Illustration, soll aber den Erfindungsumfang nicht einschränken.

Zur Herstellung der Polyamid-Formmasse werden die Komponenten auf üblichen Compoundiermaschinen, wie z.B. ein- oder zweiwelligen Extrudern oder Schneckenknetern gemischt. Die Komponenten werden dabei einzelnen in den Einzug dosiert oder in Form eines Dryblends zugeführt.

Die Zusatzstoffe können direkt oder in Form eines Masterbatches verwendet werden. Bei dem Trägermaterial des Masterbatches handelt es sich bevorzugt um ein Polyolefin oder ein Polyamid. Unter den Polyamiden eignen sich besonders PA 6, PA 12, PA 6/12 oder das Polyamid a) selbst.

Zur Dryblend-Herstellung werden die getrockneten Granulate und gegebenenfalls weitere Zusatzstoffe vermischt. Diese Mischung wird mittels eines Taumelmischers, Rhönradmischers oder Taumeltrockners 10 - 40 Minuten lang homogenisiert. Zur Vermeidung der Feuchtigkeitsaufnahme kann dies unter getrocknetem Schutzgas erfolgen.

Die Compoundierung erfolgt bei eingestellten Zylindertemperaturen von 230 °C bis 295 °C. Vor der Düse kann Vakuum angelegt oder atmosphärisch entgast werden. Die Schmelze wird in Strangform ausgetragen, im Wasserbad bei 10 bis 80 °C abgekühlt und anschließend granuliert. Das Granulat wird für 12 - 24 Stunden bei 80 bis 120 °C unter Stickstoff oder im Vakuum auf einen Wassergehalt von unter 0.1 Gew.-% getrocknet.

### Herstellung der Prüfkörper aus den erfindungsgemäßen Polyamidformmassen

Die Prüfkörper wurden auf einer Spritzgussmaschine der Firma Arburg, Modell Allrounder 420 C 1000-250 hergestellt. Dabei wurden aufsteigende Zylindertemperaturen von 230 °C bis 295 °C verwendet. Die Formtemperatur betrug 80 °C. Bei den Rundplatten für die Messung der Lichttransmission und des Hazes wurden polierte Formen verwendet.

Die Prüfkörper wurden in trockenem Zustand verwendet, dazu wurden sie nach dem Spritzguss mindestens 48 h bei Raumtemperatur in trockener Umgebung, d.h. über Silicagel gelagert.

Die Messungen wurden nach den folgenden Normen und an den folgenden Prüfkörpern aus den nach dem zuvor beschriebenen Verfahren hergestellten Polyamidformmassen durchgeführt.

### Relative Viskosität

ISO 307
Granulat
0,5 g in 100 ml m-Kresol
Temperatur 20 °C
Berechnung der relativen Viskosität (RV) nach RV = t/t₀ in Anlehnung an Abschnitt 11 der Norm.

### Glasübergangstemperatur (Tg):

ISO 11357
Granulat
Die Differential Scanning Calorimetry (DSC) wurde mit einer Aufheizrate von 20 K/min durchgeführt. Der Mittelpunkt des Glasübergangsbereichs, welcher als Tg angegeben wird, wurde nach der Methode "Half height" ermittelt.

### Schmelze-Volumenfließrate (MVR):

ISO 1133
Granulat
Temperatur 275 °C
Belastung 5 kg

### Reißfestigkeit und Reißdehnung:

ISO 527 mit einer Zuggeschwindigkeit von 50 mm/min
ISO-Zugstab, Norm: ISO/CD 3167, Typ A1, 170 x 20/10 x 4 mm,
Temperatur 23 °C

### Kerbschlagzähigkeit nach Charpy:

ISO 179/*eA
ISO-Prüfstab, Norm: ISO/CD 3167, Typ B1, 80 x 10 x 4 mm, Temperatur 23 °C
* 1 = nicht instrumentiert, 2 = instrumentiert

### Lichttransmission und Haze:

ASTM D 1003
Rundplatte, Dicke 2 mm, Radius 37,5 mm
Temperatur 23 °C
Messgerät Haze Gard plus der Firma Byk Gardner mit CIE Lichtart C. Der Lichttransmissions- und der Hazewert werden in % der eingestrahlten Lichtmenge angegeben.

Im Folgenden werden zunächst die für die Vergleichsbeispiele und erfindungsgemäßen Beispiele eingesetzten Materialien aufgeführt.

So zeigt Tabelle 1 zunächst die eingesetzten Polyamidtypen.

**Tabelle 1**

| **Komponente** | **Beschreibung** | **Herstellen** |
|---|---|---|
| PA MACM12 | amorphes Polyamid MACM12 aus Bis(3-methyl-4-amino-cyclohexyl)methan und Dodecandisäure | EMS-CHEMIE AG, Schweiz |
| | RV 1,70 (gemessen mit 0,5 g in 100 ml m-Kresol bei 20 °C), Glasübergangstemperatur 155 °C | |
| PA MACM12/ PACM12 | mikrokristallines Polyamid PA MACM12/PACM12 aus Bis(3-methyl-4-amino-cyclohexyl)methan, Bis(4-amino-cyclohexyl)methan und 1,12-Dodecandisäure Molverhältnis MACM:PACM = 30:70 | EMS-CHEMIE AG, Schweiz |
| | RV 1,80 (gemessen mit 0,5 g in 100 ml m-Kresol bei 20 °C), Glasübergangstemperatur 145 °C Schmelzpunkt 237°C | |
| PA PACM12 | mikrokristallines Polyamid PACM12 aus Bis(4-amino-cyclohexyl)methan und 1,12-Dodecandisäure | - |
| | RV 1,80 (gemessen mit 0,5 g in 100 ml m-Kresol bei 20 °C), Glasübergangstemperatur 140 °C Schmelzpunkt 250 °C | |
| PA MACMI/12 | amorphes Polyamid MACMI/12 im Molverhältnis 65/35 aus Bis(3-methyl-4-amino-cyclohexyl)methan, Isophthalsäure und Laurinlactam | EMS-CHEMIE AG, Schweiz |
| | RV 1,56 (gemessen mit 0,5 g in 100 ml m-Kresol bei 20 °C). Glasübergangstemperatur 160 °C | |
| PA MACMI/ MACMT/12 | amorphes Polyamid MACMI/MACMT/I2 im Molverhältnis 38/38/24 aus Bis(3-methyl-4-amino-cyclohexyl)methan, Isophthalsäure, Terephthalsäure und Laurinlactam | EMS-CHEMIE AG, Schweiz |
| | RV 1,53 (gemessen mit 0,5 g in 100 ml m-Kresol bei 20 °C). Glasübergangstemperatur 194 °C | |
| PA 6I/6T/MACMI/ MACMT/PACMI/ PACMT | amorphes Polyamid | EMS-CHEMIE AG, Schweiz |
| | 6I/6T/MACMI/MACMT/PACMI/PACMT aus 1,6-Hexandiamin (38,5 Mol-%), Bis(3-methyl-4-aminocyclohexyl)methan (7,5 Mol-%), Bis(3-methyl-4-amino-cyclohexyl)methan (2,7 Mol-%), Isophthalsäure (24,3 Mol-%) und Terephthalsäure (24,3 Mol-%) RV 1,62 (gemessen mit 0,5 g in 100 ml m-Kresol bei 20 °C). Glasübergangstemperatur 159 °C | |
| PA 6I/6T | amorphes Copolyamid 6I/6T aus Hexamethylendiamin, Isophthalsäure und Terephthalsäure | EMS-CHEMIE AG, Schweiz |
| | Molverhältnis Isophthalsäure:Terephthalsäure = 67:33 | |
| | RV 1,54 (gemessen mit 0,5 g in 100 ml m-Kresol bei 20 °C), Glasübergangstemperatur 125 °C | |

| | | |
|---|---|---|
| RV = relative Viskosität | | |

In Tabelle 2 werden die in den Beispielen und Vergleichsbeispielen eingesetzten Schlagzähmodifikatoren und Zusatzstoffe aufgeführt.

**Tabelle 2**

| **Komponente** | **Beschreibung** | **Handelsname** | **Hersteller** |
|---|---|---|---|
| SZM (B1) | Styrol-Ethylen/Butylen-Styrol-Blockcopolymer mit 30 Gew-% Styrol, gepfropft mit 1,7 Gew.-% Maleinsäureanhydrid MVR 130 ccm/10min bei 275 °C und 5 kg | Kraton FG1901GT | Kraton Polymers LLC, USA |
| SZM (B2) | Copolymer aus Ethylen und Glycidylmethacrylat mit 8 Gew.-% Glycidylmethacrylat | Lotader AX 8840 | Arkema GmbH, Deutschland |
| SZM (B3) | Copolymer aus Styrol und Isobutylen | Sibstar 102T | Kaneka Belgium NV, Belgien |
| SZM (B4) | Kern-Schale Polymer mit Butadien-Methylmethacrylat-Copolymer als Kern und Polystyrol als Mantel | Paraloid BTA-753 | Rohm and Haas, USA |
| SZM (B5) | Polystyrol-Polybutadien-Polymethylmethacrylat-Blockcopolymer | Clearstrength E920 | Arkema GmbH, Deutschland |
| SZM (B6) | Kern-Schale Polymer mit Butadien-Styrol-Copolymer als Kern und Polymethylmethacrylat als Schale | Paraloid EXL-3600 | Rohm and Haas, USA |
| SZM (B7) | Olefincopolymer aus Ethylen und Octen-1, gepfropft mit Maleinsäureanhydrid | Paraloid EXL-3808 | Rohm and Haas, USA |
| SZM (B8) | Copolymer aus Ethylen, Acrylester und Maleinsäureanhydrid mit 1,3 Gew.-% Maleinsäureanhydrid | Lotader 4700 | Arkema GmbH, Deutschland |
| SZM (B9) | Olefincopolymer aus Ethylen und Octen-1, gepfropft mit 0,5 Gew.-% Maleinsäureanhydrid | Fusabond MN493D | DuPont de Nemours, USA |
| SZM (B10) | Olefincopolymer aus Ethylen und Propylen, gepfropft mit Maleinsäureanhydrid | Exxelor VA 1801 | Exxon Mobil Chemicals, USA |
| Stabilisator | N,N'-bis-2,2,6,6-tetramethyl-4-piperidinyl-1,3-benzoldicarboxamid | Nylostab S-EED P | Clariant Corporation, USA |
| Gleitmittel | Calciumsalz der Octadecansäure und höherer Fettsäuren mit 16 - 18 C-Atomen | Calciumstearat S | FACI S.p.A., Italien |
| Ruß-Masterbatch | Farbruß-Masterbatch auf Polyethylenbasis mit 40 Gew.-% Farbruß | Euthylen Schwarz 00-6005 C4 | BASF Color Solutions, Deutschland |

In Tabelle 3 werden erfindungsgemäße Polyamidformmassen mit aus dem Stand der Technik bekannten Polyamidformmassen hinsichtlich der mechanischen Eigenschaften (Reißfestigkeit, Reißdehnung und Kerbschlagzähigkeit nach Charpy) sowie der optischen Eigenschaften (Lichttransmission, Haze) verglichen.

**Tabelle 3**

| | | **Beispiele** | | | | | **Vergleichsbeispiele e** | | |
|---|---|---|---|---|---|---|---|---|---|
| **Komponenten** | **Einheit** | **1** | **2** | **3** | **4** | **5** | **6** | **7** | **8** |
| PA MACM12 | Gew.-% | 89,6 | 87,6 | - | - | - | 99,5 | 97,6 | 79,6 |
| PA MACM12/ PACM12 | Gew.-% | - | - | 89,6 | - | - | - | - | - |
| PA PACM12 | Gew.-% | - | - | - | 89,6 | 87,6 | - | - | - |
| SZM (B1) | Gew.-% | 10 | 12 | 10 | 10 | 12 | - | 3 | 20 |
| Stabilisator | Gew.-% | 0,1 | 0,1 | 0,1 | 0,1 | 0,1 | 0,1 | 0,1 | 0,1 |
| Gleitmittel | Gew.-% | 0,3 | 0,3 | 0,3 | 0,3 | 0,3 | 0,3 | 0,3 | 0,3 |

| **Tests** | | | | | | | | | |
|---|---|---|---|---|---|---|---|---|---|
| Reißfestigkeit | MPa | 43 | 44 | 44 | 42 | 41 | 45 | 45 | 39 |
| Reißdehnung | % | 126 | 131 | 121 | 116 | 119 | 150 | 146 | 155 |
| Kerbschlag Charpy 23 °C | kJ/m2 | 70 | 70 | 80 | 76 | 78 | 13 | 17 | 89 |
| Lichttransmission | % | 92,5 | 92,3 | 85,6 | 85,7 | 85,4 | 94 | 92,8 | 78,2 |
| Haze | % | 13 | 15 | 22 | 25 | 26 | 1 | 8 | 47 |

| | | | | | | | | | |
|---|---|---|---|---|---|---|---|---|---|
| SZM Schlagzähmodifikator | | | | | | | | | |

Die erfindungsgemäßen Polyamidformmassen mit 10 bzw. 12 Gew.-% des erfindungsgemäßen Schlagzähmodifikators (Beispiel 1 bis 5) zeigen sehr gute Kerbschlagwerte und gleichzeitig gute Hazewerte.

Bei Verwendung von 3 Gew.-% des erfindungsgemäßen Schlagzähmodifikators (Vergleichsbeispiel 7) resultiert eine zu geringe Kerbschlagzähigkeit der Polyamidformmasse, wohingegen bei 20 Gew.-% des erfindungsgemäßen Schlagzähmodifikators (Vergleichsbeispiel 8) der Hazewert zu hoch ist.

In Tabelle 4 werden Polyamidformmassen aus PA MACM12 mit unterschiedlichen nicht-erfindungsgemäßen Schlagzähmodifikatoren hinsichtlich der mechanischen und optischen Eigenschaften untersucht.

**Tabelle 4**

| | | **Vergleichsbeispiele** | | | | | | | | | |
|---|---|---|---|---|---|---|---|---|---|---|---|
| **Komponenten** | **Einheit** | **9** | **10** | **11** | **12** | **13** | **14** | **15** | **16** | **17** | **18** |
| PA MACM12 | Gew.-% | 87,6 | 89,6 | 89,6 | 89,6 | 89,6 | 89,6 | 89,6 | 89,6 | 89,6 | 89,6 |
| SZM (B2) | Gew.-% | 12 | 10 | - | - | - | - | - | - | - | - |
| SZM (B3) | Gew.-% | - | - | 10 | - | - | - | - | - | - | - |
| SZM (B4) | Gew.-% | - | - | - | 10 | - | - | - | - | - | - |
| SZM (B5) | Gew.-% | - | - | - | - | 10 | - | - | - | - | - |
| SZM (B6) | Gew.-% | - | - | - | - | - | 10 | - | - | - | - |
| SZM (B7) | Gew.-% | - | - | - | - | - | - | 10 | - | - | - |
| SZM (B8) | Gew.-% | - | - | - | - | - | - | - | 10 | - | - |
| SZM (B9) | Gew.-% | - | - | - | - | - | - | - | - | 10 | - |
| SZM (B10) | Gew.-% | - | - | - | - | - | - | - | - | - | 10 |
| Stabilisator | Gew.-% | 0,1 | 0,1 | 0,1 | 0,1 | ob | 0,1 | 0,1 | 0,1 | 0,1 | 0,1 |
| Gleitmittel | Gew.-% | 0,3 | 0,3 | 0,3 | 0,3 | 0,3 | 0.3 | 0,3 | 0,3 | 0,3 | 0,3 |

| **Tests** | | | | | | | | | | | |
|---|---|---|---|---|---|---|---|---|---|---|---|
| Reißfestigkeit | MPa | 41 | 39 | 38 | 43 | 47 | 44 | 43 | 40 | 45 | 47 |
| Reißdehnung | % | 91 | 30 | 21 | 89 | 131 | 114 | 120 | 79 | 133 | 138 |
| Kerbschlag Charpy 23 °C | kJ/m2 | 39 | 23 | 8 | 21 | 16 | 28 | 55 | 41 | 54 | 27 |
| Lichttransmission | % | 82,0 | 83,6 | 88,7 | 71,5 | 84,2 | 76,1 | 66,4 | 60,5 | 60,8 | 69, 5 |
| Haze | % | 41 | 38 | 61 | 62 | 68 | 83 | 98 | 96 | 99 | 99 |

Die in den Polyamidformmassen der Vergleichsbeispiele 9 bis 18 verwendeten Schlagzähmodifikatoren verbessern die Kerbschlagzähigkeit im Vergleich zum erfindungsgemäßen Schlagzähmodifikator (Beispiele 1 bis 5) weniger stark und führen darüber hinaus noch zu einer extrem starken Erhöhung des Hazes.

Beim Schlagzähmodifikator B2 (Vergleichsbeispiele 9 und 10) handelt es sich um Ethylen-Glycidyl-Methacrylat wie im Stand der Technik (EP 1 369 447 A1) empfohlen. Er führt allerdings verglichen mit erfindungsgemäßen Polyamidformmassen der Beispiele 2 und 1 zu einer unausgewogenen Kombination von Kerbschlagzähigkeit und Haze.

Bei den Schlagzähmodifikatoren B7, B9 und B10 handelt es sich ebenfalls um in EP 1 369 447 A1 empfohlene Schlagzähmodifikatoren, nämlich um mit Maleinsäureanhydrid modifizierte Polyethylene oder Polypropylene. Sie alle führen jedoch zu extrem hohen Hazewerten.

In Tabelle 5 werden Polyamidformmassen mit Polyamid-Bestandteilen, wie sie im Stand der Technik eingesetzt werden, hinsichtlich der mechanischen und optischen Eigenschaften untersucht.

**Tabelle 5**

| | | **Vergleichsbeispiele** | | | |
|---|---|---|---|---|---|
| **Komponenten** | **Einheit** | **19** | **20** | **21** | **22** |
| PA MACMI/12 | Gew.-% | 89,6 | - | - | - |
| PA MACMI/MACMT/12 | Gew.-% | - | 89,6 | - | - |
| PA | Gew.-% | - | - | 89,6 | - |
| 6I/6T/MACMI/MACMT/PACMI/PACMT | | | | | |
| PA 6I/6T | Gew.-% | - | - | - | 89,6 |
| SZM (B1) | Gew.-% | 10 | 10 | 10 | 10 |
| Stabilisator | Gew.-% | 0,1 | 0,1 | 0,1 | 0,1 |
| Gleitmittel | Gew.-% | 0,3 | 0,3 | 0,3 | 0,3 |

| **Tests** | | | | | |
|---|---|---|---|---|---|
| Reißfestigkeit | MPa | 52 | 58 | 62 | 62 |
| Reißdehnung | % | 92 | 37 | 62 | 154 |
| Kerbschlag | kJ/m2 | 47 | 38 | 77 | 99 |
| Charpy 23 °C | | | | | |
| Lichttransmission | % | 52,2 | 46,0 | 21,9 | 21,6 |
| Haze | % | 83 | 96 | 99 | 98 |

Die Vergleichsbeispiele 19 bis 22 zeigen die Wirkung des erfindungsgemäßen Schlagzähmodifikators B1 in Kombination mit nicht erfindungsgemäßen Polyamiden. In diesen Polyamiden führt sogar der erfindungsgemäße Schlagzähmodifikator zu Polyamidformmassen mit unbrauchbar hohen Hazewerten und extrem niedrigen Lichttransmissionswerten.

In Tabelle 6 wird eine erfindungsgemäße Polyamidformmasse mit Ruß-Anteil mit einer Polyamidformmasse aus dem Stand der Technik, die nicht den erfindungsgemäßen Schlagzähmodifikator aufweist (Vergleichsbeispiel 25), hinsichtlich der mechanischen Eigenschaften verglichen und dabei sowohl eine Verbesserung der Reißdehnung als auch eine extreme Verbesserung der Kerbschlagzähigkeit aufgezeigt (Beispiele 23 und 24).

**Tabelle 6**

| | | **Beispiele** | | **Vergleichsbeispiel** |
|---|---|---|---|---|
| **Komponenten** | **Einheit** | **23** | **24** | **25** |
| PA MACM12 | Gew.-% | 87,6 | 87,6 | 97,6 |
| SZM (B1) | Gew.-% | 10 | 12 | - |
| Stabilisator | Gew.-% | 0,1 | 0,1 | 0,1 |
| Gleitmittel | Gew.-% | 0,3 | 0,3 | 0,3 |
| Ruß-Masterbatch | Gew.-% | 2 | 2 | 2 |

| **Tests** | | | | |
|---|---|---|---|---|
| Reißfestigkeit | MPa | 43 | 43 | 45 |
| Reißdehnung | % | 120 | 120 | 115 |
| Kerbschlag Charpy 23 °C | kJ/m2 | 57 | 66 | 10 |

## Patentansprüche

1. Polyamidformmasse enthaltend
a) 82 bis 96 Gew.-%, bezogen auf die Summe der Komponenten a) bis c), mindestens eines Polyamids ausgewählt aus der Gruppe bestehend aus
- Polyamid (PA MACM12) aus Bis(3-methyl-4-aminocyclohexyl)methan und Dodecandisäure,
- Polyamid (PA PACM12) aus Bis(4-amino-cyclohexyl)methan und Dodecandisäure,
- Polyamid (PA MACM10) aus Bis(3-methyl-4-aminocyclohexyl)methan und Decandisäure,
- Polyamid (PA PACM10) aus Bis(4-aminocyclohexyl)methan und Decandisäure,
- Polyamid (PA MACM14) aus Bis(3-methyl-4-aminocyclohexyl)methan und Tetradecandisäure,
- Polyamid (PA PACM14) aus Bis(4-aminocyclohexyl)methan und Tetradecandisäure sowie
- deren Mischungen und Copolyamiden,
b) 4 bis 18 Gew.-%, bezogen auf die Summe der Komponenten a) bis c), eines funktionalisierten Styrol-Ethylen/Butylen-Styrol-Blockcopolymers als Schlagzähmodifikator sowie
c) 0 bis 8 Gew.-%, bezogen auf die Summe der Komponenten a) bis c), weiterer Zusatzstoffe,
wobei sich die Komponenten a) bis c) zu 100 Gew.-% addieren.

2. Polyamidformmasse nach Anspruch 1,
**dadurch gekennzeichnet, dass** aus der Polyamidformmasse hergestellte Prüfkörper einen Haze, gemessen an 2 mm dicken Rundplatten nach ASTM D 1003, von maximal 30 %, insbesondere maximal 20 % aufweisen.

3. Polyamidformmasse nach einem der vorhergehenden Ansprüche, **dadurch gekennzeichnet, dass** aus der Polyamidformmasse hergestellte Prüfkörper eine Kerbschlagzähigkeit nach Charpy, gemessen nach ISO 179, von mindestens 40 kJ/m², bevorzugt von mindestens 50 kJ/m² und besonders bevorzugt von mindestens 60 kJ/m² aufweisen.

4. Polyamidformmasse nach einem der vorhergehenden Ansprüche, **dadurch gekennzeichnet, dass** aus der Polyamidformmasse hergestellte Prüfkörper einen Reißfestigkeit von mindestens 30 MPa, bevorzugt 40 MPa und/oder eine Reißdehnung von mindestens 80 %, bevorzugt mindestens 100 % und besonders bevorzugt 115 %, jeweils gemessen nach ISO 527, aufweisen.

5. Polyamidformmasse nach einem der vorhergehenden Ansprüche, **dadurch gekennzeichnet, dass** aus der Polyamidformmasse hergestellte Prüfkörper eine Lichttransmission von mindestens 75 %, bevorzugt von mindestens 85 % und besonders bevorzugt von mindestens 90 %, gemessen an 2 mm dicken Rundplatten nach ASTM D 1003, aufweisen.

6. Polyamidformmasse nach einem der vorhergehenden Ansprüche, **dadurch gekennzeichnet, dass** die Polyamidformmasse von 84 bis 96 Gew.-%, insbesondere von 85 bis 95 Gew.-%, jeweils bezogen auf die Summe der Komponenten a) bis c), des Polyamids enthält.

7. Polyamidformmasse nach einem der vorhergehenden Ansprüche, **dadurch gekennzeichnet, dass** die Polyamidformmasse von 4 bis 16 Gew.-%, insbesondere von 5 bis 15 Gew.-%, jeweils auf die Summe der Komponenten a) bis c), des funktionalisierten Styrol-Ethylen/Butylen-Styrol-Blockcopolymers enthält.

8. Polyamidformmasse nach einem der vorhergehenden Ansprüche, **dadurch gekennzeichnet, dass** das funktionalisierte Styrol-Ethylen/Butylen-Styrol-Blockcopolymer einen Styrolanteil von 20 bis 45 Gew.-%, bevorzugt von 25 bis 40 Gew.-% und besonders bevorzugt von 25 bis 35 Gew.-% aufweist.

9. Polyamidformmasse nach einem der vorhergehenden Ansprüche, **dadurch gekennzeichnet, dass** das funktionalisierte Styrol-Ethylen/Butylen-Styrol-Blockcopolymer eine Schmelze-Volumenfliessrate von 90 bis 160 ccm/10min, bevorzugt von 100 bis 150 ccm/10min und besonders bevorzugt von 110 bis 140 ccm/10min, jeweils gemessen bei 275 °C und 5 kg nach ISO 1133 aufweist.

10. Polyamidformmasse nach einem der vorhergehenden Ansprüche, **dadurch gekennzeichnet, dass** das funktionalisierte Styrol-Ethylen/Butylen-Styrol-Blockcopolymer einen Funktionalisierungsanteil von 1,0 bis 2,3 Gew.-%, bevorzugt von 1,1 bis 2,0 Gew.-% und besonders bevorzugt von 1,4 bis 1,9 Gew.-% aufweist.

11. Polyamidformmasse nach einem der vorhergehenden Ansprüche, **dadurch gekennzeichnet, dass** das funktionalisierte Styrol-Ethylen/Butylen-Styrol-Blockcopolymer zumindest teilweise mit ungesättigten Carbonsäuren und/oder ungesättigten Carbonsäurederivaten, insbesondere mit einem Maleinsäureanhydrid, gepfropft ist.

12. Polyamidformmasse nach einem der vorhergehenden Ansprüche, **dadurch gekennzeichnet, dass** die Zusatzstoffe ausgewählt sind aus der Gruppe bestehend aus anorganischen und organischen Stabilisatoren, insbesondere Antioxidantien, Antiozonantien, Lichtschutzmittel, UV-Stabilisatoren, UV-Absorber oder UV-Blocker, Gleitmitteln, Farbstoffen, Markierungsmitteln, Pigmenten, Ruß, Graphit, Titandioxid, Zinksulfid, Zinkoxid, Bariumsulfat, photochromen Agenzien, Antistatika, Entformungsmitteln, optischen Aufhellern, halogenhaltigen Flammschutzmitteln, halogenfreien Flammschutzmitteln, natürlichen Schichtsilikaten, synthetischen Schichtsilikaten und deren Mischungen und bevorzugt in einer Menge von 0,1 bis 6 Gew.-%, besonders bevorzugt 0,2 bis 4 Gew.-%, bezogen auf die gesamte Polyamidformmasse, enthalten sind, wobei die Menge jedes einzelnen Zusatzstoffes maximal 3 Gew.-% beträgt.

13. Formkörper herstellbar aus einer Polyamidformmasse nach einem der vorhergehenden Ansprüche.

14. Formkörper nach Anspruch 13,
**dadurch gekennzeichnet, dass** der Formkörper ausgewählt ist aus der Gruppe bestehend aus Brillenteilen, insbesondere Brillenrahmen oder Brillenbügeln, insbesondere für Sicherheitsbrillen, Sportbrillen oder Skibrillen, Schaugläsern, Durchflussmessern, Berstscheiben, Behältern, Gehäusen oder Gehäuseteilen, insbesondere für Rasierapparate, Epiliergeräte, Messgeräte, Infrarotschlüssel, Mobiltelefone, Abspielgeräte, Personal Digital Assistants (PDA), Smartphones oder Speichermedien (z.B. USB-Sticks).

15. Verwendung der Formmassen nach einem der Ansprüche 1 bis 12 zur Herstellung von Brillenteilen, insbesondere Brillenrahmen oder Brillenbügeln, insbesondere für Sicherheitsbrillen, Sportbrillen oder Skibrillen, Schaugläsern, Durchflussmessern, Berstscheiben, Behältern, Gehäusen oder Gehäuseteilen, insbesondere für Rasierapparate, Epiliergeräte, Messgeräte, Infrarotschlüssel, Mobiltelefone, Abspielgeräte, Personal Digital Assistants (PDA), Smartphones oder Speichermedien (z.B. USB-Sticks).

## Claims

1. Polyamide moulding compound comprising
a) 82 to 96% by weight, relative to the sum of components a) to c), of at least one polyamide selected from the group consisting of
- polyamide (PA MACM12) made of bis(3-methyl-4-aminocyclohexyl)methane and dodecanedioic acid,
- polyamide (PA PACM12) made of bis(4-aminocyclohexyl)methane and dodecanedioic acid,
- polyamide (PA MACM10) made of bis(3-methyl-4-aminocyclohexyl)methane and decanedioic acid,
- polyamide (PA PACM10) made of bis(4-aminocyclohexyl)methane and decanedioic acid,
- polyamide (PA MACM14) made of bis(3-methyl-4-aminocyclohexyl)methane and tetradecanedioic acid,
- polyamide (PA PACM14) made of bis(4-aminocyclohexyl)methane and tetradecanedioic acid and also
- mixtures and copolyamides thereof,
b) 4 to 18% by weight, relative to the sum of components a) to c), of a functionalised styrene-ethylene/butylene-styrene block copolymer as impact modifier and also
c) 0 to 8% by weight, relative to the sum of components a) to c), of further additives,
components a) to c) adding up to 100% by weight.

2. Polyamide moulding compound according to claim 1,
**characterised in that** test pieces produced from the polyamide moulding compound have a haze, measured on 2 mm thick round plates according to ASTM D 1003, of at most 30%, in particular at most 20%.

3. Polyamide moulding compound according to one of the preceding claims,
**characterised in that** test pieces produced from the polyamide moulding compound have a notch impact strength according to Charpy, measured according to ISO 179, of at least 40 kJ/m², preferably of at least 50 kJ/m² and particularly preferred of at least 60 kJ/m².

4. Polyamide moulding compound according to one of the preceding claims,
**characterised in that** test pieces produced from the polyamide moulding compound have a tear strength of at least 30 MPa, preferably 40 MPa and/or a breaking elongation of at least 80%, preferably at least 100% and particularly preferred 115%, respectively measured according to ISO 527.

5. Polyamide moulding compound according to one of the preceding claims,
**characterised in that** test pieces produced from the polyamide moulding compound have a light transmission of at least 75%, preferably of at least 85% and particularly preferred of at least 90%, measured on 2 mm thick round plates according to ASTM D 1003.

6. Polyamide moulding compound according to one of the preceding claims,
**characterised in that** the polyamide moulding compound comprises from 84 to 96% by weight, in particular from 85 to 95% by weight, respectively relative to the sum of components a) to c), of the polyamide.

7. Polyamide moulding compound according to one of the preceding claims,
**characterised in that** the polyamide moulding compound comprises from 4 to 16% by weight, in particular from 5 to 15% by weight, respectively to the sum of components a) to c), of the functionalised styrene-ethylene/butylene-styrene block copolymer.

8. Polyamide moulding compound according to one of the preceding claims,
**characterised in that** the functionalised styrene-ethylene/butylene-styrene block copolymer has a proportion of styrene of 20 to 45%, preferably of 25 to 40% by weight and particularly preferred of 25 to 35% by weight.

9. Polyamide moulding compound according to one of the preceding claims,
**characterised in that** the functionalised styrene-ethylene/butylene-styrene block copolymer has a melt-volume flow rate of 90 to 160 ccm/10 min, preferably of 100 to 150 ccm/10 min and particularly preferred of 110 to 140 ccm/10 min, respectively measured at 275°C and 5 kg according to ISO 1133.

10. Polyamide moulding compound according to one of the preceding claims,
**characterised in that** the functionalised styrene-ethylene/butylene-styrene block copolymer has a functionalisation proportion of 1.0 to 2.3% by weight, preferably of 1.1 to 2.0% by weight and particularly preferred of 1.4 to 1.9% by weight.

11. Polyamide moulding compound according to one of the preceding claims,
**characterised in that** the functionalised styrene-ethylene/butylene-styrene block copolymer is grafted at least partially with unsaturated carboxylic acids and/or unsaturated carboxylic acid derivatives, in particular with a maleic acid anhydride.

12. Polyamide moulding compound according to one of the preceding claims,
**characterised in that** the additives are selected from the group consisting of inorganic and organic stabilisers, in particular antioxidants, antiozonants, light protection agents, UV stabilisers, UV absorbers or UV blockers, lubricants, colourants, marking agents, pigments, carbon black, graphite, titanium dioxide, zinc sulphide, zinc oxide, barium sulphate, photochromic agents, antistatic agents, mould-release agents, optical brighteners, halogen-containing flame retardants, halogen-free flame retardants, natural layer silicates, synthetic layer silicates and mixtures thereof and are contained preferably in a quantity of 0.1 to 6% by weight, particularly preferred 0.2 to 4% by weight, relative to the total polyamide moulding compound, the quantity of each individual additive being at most 3% by weight.

13. Moulded article producible from a polyamide moulding compound according to one of the preceding claims.

14. Moulded article according to claim 13,
**characterised in that** the moulded article is selected from the group consisting of spectacle parts, in particular spectacle earpieces or spectacle earpieces, in particular for safety goggles, sports goggles or ski goggles, inspection glasses, throughflow meters, bursting discs, containers, housings or housing parts, in particular for shaving apparatus, depilating appliances, measuring devices, infrared keys, mobile phones, transportable playback devices, personal digital assistants, (PDA), smart phones or memory media (e.g. USB sticks)

15. Use of the moulding compounds according to one of the claims 1 to 12 for the production of spectacle parts in particular spectacle frames or spectacle earpieces, in particular for safety goggles, sports goggles or ski goggles, inspection glasses, throughflow meters, bursting discs, containers, housings or housing parts, in particular for shaving apparatus, depilating appliances, measuring devices, infrared keys, mobile phones, transportable playback devices, personal digital assistants, (PDA), smart phones or memory media (e.g. USB sticks).

## Revendications

1. Mélange à mouler de polyamide, contenant
a) 82 à 96 % en poids, par rapport à la somme des composants a) à c), d'au moins un polyamide choisi dans le groupe consistant en
- le polyamide (PA MACM12) obtenu à partir de bis(3-méthyl-4-aminocyclohexyl)méthane et d'acide dodécanedioïque,
- le polyamide (PA PACM12) obtenu à partir de bis(4-amino-cyclohexyl)méthane et d'acide dodécanedioïque,
- le polyamide (PA MACM10) obtenu à partir de bis(3-méthyl-4-aminocyclohexyl)méthane et d'acide décanedioïque,
- le polyamide (PA PACM10) obtenu à partir de bis(4-aminocyclohexyl)méthane et d'acide décanedioïque,
- le polyamide (PA MACM14) obtenu à partir de bis(3-méthyl-4-aminocyclohexyl)méthane et d'acide tétradécanedioïque,
- le polyamide (PA PACM14) obtenu à partir de bis(4-aminocyclohexyl)méthane et d'acide tétradécanedioïque, ainsi que
- les mélanges et copolyamides de ceux-ci,
b) 4 à 18 % en poids, par rapport à la somme des composants a) à c), d'un copolymère à blocs styrène-éthylène/butylène-styrène fonctionnalisé en tant que modifiant choc, ainsi que
c) 0 à 8 % en poids, par rapport à la somme des composants a) à c), d'autres additifs,
la somme des composants a) à c) étant de 100 % en poids.

2. Mélange à mouler de polyamide selon la revendication 1, **caractérisé en ce que** l'éprouvette fabriquée à partir du mélange à mouler de polyamide présente un voile, mesuré sur des plaques circulaires de 2 mm d'épaisseur selon ASTM D 1003, au maximum de 30 %, en particulier au maximum de 20 %.

3. Mélange à mouler de polyamide selon l'une des revendications précédentes, **caractérisé en ce que** les éprouvettes fabriquées à partir du mélange à mouler de polyamide présentent une résistance au choc sur barreau entaillé selon Charpy, mesurée selon ISO 179, d'au moins 40 kJ/m², de préférence d'au moins 50 kJ/m² et d'une manière particulièrement préférée d'au moins 60 kJ/m².

4. Mélange à mouler de polyamide selon l'une des revendications précédentes, **caractérisé en ce que** les éprouvettes fabriquées à partir du mélange à mouler de polyamide présentent une résistance à la déchirure d'au moins 30 MPa, de préférence de 40 MPa, et/ou un élongation à la déchirure d'au moins 80 %, de préférence d'au moins 100 % et d'une manière particulièrement préférée de 115 %, chacun mesuré selon ISO 527.

5. Mélange à mouler de polyamide selon l'une des revendications précédentes, **caractérisé en ce que** les éprouvettes fabriquées à partir du mélange à mouler de polyamide présentent un facteur de transmission de la lumière d'au moins 75 %, de préférence d'au moins 85 % et d'une manière particulièrement préférée d'au moins 90 %, mesuré sur des plaques circulaires de 2 mm d'épaisseur selon ASTM D 1003.

6. Mélange à mouler de polyamide selon l'une des revendications précédentes, **caractérisé en ce que** le mélange à mouler de polyamide contient de 84 à 96 % en poids, en particulier de 85 à 95 % en poids, dans chaque cas par rapport à la somme des composants a) à c), du polyamide.

7. Mélange à mouler de polyamide selon l'une des revendications précédentes, **caractérisé en ce que** le mélange à mouler de polyamide contient 4 à 16 % en poids, en particulier de 5 à 15 % en poids, dans chaque cas par rapport à la somme des composants a) à c), du copolymère à blocs styrène-éthylène/butylène-styrène fonctionnalisé.

8. Mélange à mouler de polyamide selon l'une des revendications précédentes, **caractérisé en ce que** le copolymère à blocs styrène-éthylène/butylène-styrène fonctionnalisé présente une teneur en styrène de 20 à 45 % en poids, de préférence de 25 à 40 % en poids et d'une manière particulièrement préférée de 25 à 35 % en poids.

9. Mélange à mouler de polyamide selon l'une des revendications précédentes, **caractérisé en ce que** le copolymère à blocs styrène-éthylène/butylène-styrène fonctionnalisé présente un indice de fluidité à chaud en volume de 90 à 160 cm³/10 min, de préférence de 100 à 150 cm³/10 min et d'une manière particulièrement préférée de 110 à 140 cm³/10 min, dans chaque cas mesuré à 275°C sous 5 kg selon ISO 1133.

10. Mélange à mouler de polyamide selon l'une des revendications précédentes, **caractérisé en ce que** le copolymère à blocs styrène-éthylène/butylène-styrène fonctionnalisé présente une fraction de fonctionnalisation de 1,0 à 2,3 % en poids, de préférence de 1,1 à 2,0 % en poids et d'une manière particulièrement préférée de 1,4 à 1,9 % en poids.

11. Mélange à mouler de polyamide selon l'une des revendications précédentes, **caractérisé en ce que** des acides carboxyliques insaturés et/ou des dérivés d'acides carboxyliques insaturés, en particulier un anhydride maléique, sont au moins partiellement greffés sur le copolymère à blocs styrène-éthylène/butylène-styrène fonctionnalisé.

12. Mélange à mouler de polyamide selon l'une des revendications précédentes, **caractérisé en ce que** les additifs sont choisis dans le groupe consistant en les stabilisants inorganiques et organiques, en particulier les antioxydants, les anti-ozonants, les agents de protection contre la lumière, les stabilisants UV, les absorbants UV ou les agents bloquant les UV, les lubrifiants, les colorants, les agents de marquage, les pigments, le noir de carbone, le graphite, le dioxyde de titane, le sulfure de zinc, l'oxyde de zinc, le sulfate de baryum, les agents photochromiques, les antistatiques, les agents de démoulage, les azurants optiques, les retardateurs de flamme halogénés, les retardateurs de flamme non halogénés, les phyllosilicates naturels, les phyllosilicates synthétiques et les mélanges de ceux-ci, et de préférence sont présents en une quantité de 0,1 à 6 % en poids, d'une manière particulièrement préférée de 0,2 à 4 % en poids, par rapport à la totalité du mélange à mouler de polyamide, la quantité de chaque additif pris individuellement étant au maximum de 3 % en poids.

13. Objet moulé pouvant être fabriqué à partir d'un mélange à mouler de polyamide selon l'une des revendications précédentes.

14. Objet moulé selon la revendication 13, **caractérisé en ce que** l'objet moulé est choisi dans le groupe consistant en les éléments de lunettes, en particulier les montures de lunettes ou les branches de lunettes, en particulier pour lunettes de sécurité, lunettes de sport ou lunettes de ski, les voyants, les débitmètres, les disques de rupture, les récipients, les boîtiers ou éléments de boîtiers, en particulier pour appareils de rasage, épilateurs, appareils de mesure, clés infrarouges, téléphones mobiles, lecteurs, assistants électroniques de poche (PDA), smartphones ou supports d'enregistrement (par exemple des clés USB).

15. Utilisation des mélanges à mouler selon l'une des revendications 1 à 12 pour fabriquer des parties de lunettes, en particulier des cadres de lunettes ou des branches de lunettes, en particulier pour lunettes de sécurité, lunettes de sport ou lunettes de ski, des voyants, des débitmètres, des disques de rupture, des récipients, de boîtiers ou des éléments de boîtiers, en particulier pour appareils de rasage, épilateurs, appareils de mesure, clés infrarouges, téléphones mobiles, lecteurs, assistants électroniques de poche (PDA), smartphones ou supports d'enregistrement (par exemple des clés USB).
